# EUROPÄISCHE PATENTSCHRIFT

(11) **EP 0 879 697 B1**
(45) Veröffentlichungstag und Bekanntmachung des Hinweises auf die Patenterteilung: **01.09.2004**
(21) Anmeldenummer: 98109456.8
(22) Anmeldetag: 25.05.1998
(51) Int. Cl.: B32B 31/20, D21H 25/18

(54) **Verfahren und Vorrichtung zum Kaschieren**
Method and apparatus for lining
Procédé et dispositif pour recouvrir

(30) Priorität: 23.05.1997 DE 19721706
(43) Veröffentlichungstag der Anmeldung: 25.11.1998
(73) Patentinhaber: Becker Preservotec GmbH, 71364 Winnenden (DE)
(72) Erfinder: Becker, Ernst, 73663 Berglen (DE); Wächter, Wolfgang, Dr., Hauptweg PSF 3/42 (DE); Gaibler, Hans-Peter, 71404 Korb (DE); Seidl, Günter, Dr., 09122 Chemnitz (DE)
(74) Vertreter: Alber, Norbert, Dipl.-Ing.

(56) Entgegenhaltungen:
- EP-A- 0 264 680
- DD-A- 251 728
- DE-A- 3 835 027
- DE-U- 9 413 112
- US-A- 4 169 007

## Beschreibung

Die Erfindung betrifft das Kaschieren von schwer handhabbaren, blattförmigen Substraten. Ein derartiges Kaschieren wird beispielsweise bei der Restaurierung von Büchern, Handschriften, Noten, Zeitschriften, Loseblattsammlungen, Akten etc. angewandt. Dabei wird das Buch zunächst in einzelne Blätter zerlegt. Diese Blätter sind meist schon soweit beschädigt, daß sie Löcher oder Beschädigungen am Rand etc. aufweisen.

Zunächst werden diese makroskopischen Beschädigungen behoben, indem die beschädigten Seiten angefasert werden, also mit neuer Papiermasse verfüllt werden. Zu diesem Zweck werden in der Regel gleich mehrere beschädigte Blätter auf ein feines Siebgewebe nebeneinander gelegt und eine Schlämme, die Papierfasern enthält, darüber gegossen. Da die Schlämme nur durch die Beschädigungen der Seite nach unten abfließen kann, werden genau diese Beschädigungen und alle Zwischenräume zwischen den Seiten mit den Papierfasern verfüllt, und der Vorgang wird beendet, sobald an diesen Fehlstellen die ursprüngliche Dicke wieder erreicht ist. Diese makroskopisch wieder hergestellten Seiten werden im folgenden Formate genannt. Bei endloser Bearbeitung der beschädigten Seiten mittels Anfasern entstehen dabei keine Formate in Form einzelner Bögen, sondern ein Formatband.

Diese makroskopische Fehlstellenbeseitigung kann auch unterbleiben, und erst zu einem späteren Zeitpunkt, beispielsweise nach dem Einbringen der Kernschicht und Ablösen der Kaschierungen, nachgeholt werden. In diesem Fall dient dann das Kernmaterial als Sieb zum Zurückhalten der Papierfasern, die bei der Fehlstellenbeseitigung darüber gegossen werden.

Diese Formate sollen anschließend mechanisch und chemisch dadurch stabilisiert werden, daß in das Innere des Formates, also in dessen Längsmittelebene, ein stabilisierendes Kernmaterial eingebracht wird.

Zu diesem Zweck wird auf die beiden Seitenflächen des Formates ein Kaschiermaterial aufgebracht und flächig, fest mit dem Format verbunden, also z. B. verklebt.

Sofern diese Verklebung stärker ist als der innere Zusammenhalt des ursprünglichen Papiers des Formates, können die beiden Kaschierungen anschließend auseinandergezogen werden, wobei an jeder der beiden Kaschierungen die Hälfte des ursprünglichen Formates haften bleibt.

Diese beiden Hälften werden anschließend auf ein Kernmaterial aufgebracht und mit diesem flächig verbunden, welches dann die Mitte des ursprünglichen Formates, also der ursprünglichen Buchseite, bildet. Anschließend werden die der vorherigen Handhabung dienenden Kaschierungen wieder entfernt, indem die Verklebung der Kaschierung mit dem Format physikalisch oder chemisch gelöst wird.

Durch das Kernmaterial ist das ursprüngliche Format mechanisch wesentlich stabiler, und durch das Kernmaterial und/oder die beteiligten Kleber wird das Ausgangsmaterial auch chemisch stabilisiert, insbesondere im Hinblick auf den pH-Wert gepuffert, da vor allem die im alten Papier bzw. dessen beschriftender Tinte oder Druckfarbe enthaltenen Säuren das Papier langfristig zerstören.

Die so aufbereiteten Formate werden anschließend auf die passende Größe geschnitten und neu zu einem Buch gebunden, in der Regel natürlich unter Verwendung der alten Buchdeckel und Buchrücken.

Dieses Verfahren ist an sich bekannt, wird jedoch bisher nur von Hand durchgeführt, da der Zustand jedes Buches hinsichtlich Art und Umfang der Beschädigungen, chemischer und physikalischer Beschaffenheit des Papiers etc. so unterschiedlich war, daß eine automatisierte oder teilautomatisierte Durchführung für nicht möglich gehalten wurde.

Dabei ist jedoch der Kostenaufwand für die Restaurierung eines Buches so hoch, daß nur wenige ausgewählte Werke auf diese Art und Weise gerettet werden können. Selbst wenn ausreichende finanzielle Mittel zur Verfügung stünden, ist die Anzahl der Fachkräfte, die in der Lage sind, derartige Arbeiten durchzuführen, so gering, daß vor einer endgültigen Zerstörung der gefährdeten Buchbestände nur maximal 5% noch gerettet werden könnten.

Die vorliegende Erfindung kann zum Kaschieren im Rahmen des vorbeschriebenen Behandlungsablaufes eingesetzt werden, jedoch auch zum Kaschieren anderer schwer handhabbarer, insbesondere saugfähiger, blattförmiger Materialien.

Weiterhin ist es aus der DD-A-251 728 bekannt, im Durchlaufverfahren Kaschierungen auf beide Seiten der Formate aufzubringen, wobei die Formate zunächst auf eine von unten zugeführte untere Kaschierbahn aufgelegt und anschließend mit einer von oben zugeführten Kaschierbahn abgedeckt und dieser Verbund verpresst wird.

Eine Trocknung erfolgt dabei erst nach der Aufspaltung des geschaffenen Kaschierverbundes. Durch die bekannte Vorgehensweise kann jedoch die notwendige exakte Positionierung der Formate auf den Kaschierbahnen nicht erreicht bzw. beibehalten werden.

Die Aufgabe gemäß der Erfindung besteht darin, ein Kaschierverfahren zu schaffen, welches die vollautomatische oder teitautomatische Kaschierung von Formaten ermöglicht, und zwar weitestgehend unabhängig vom Ausgangsmaterial, also von der chemischen und physikalischen Zusammensetzung des Formates.

Dabei werden als Umgebungsbedingungen eine Luftfeuchtigkeit von größer als 40%, insbesondere von 50% - 60%, zu bevorzugen und eine Temperatur von mindestens 20°C, insbesondere von 22°C - 24°C.

Diese Aufgabe wird durch Anspruch 1 gelöst. Vorteilhafte Ausführungsformen ergeben sich aus den Unteransprüchen.

Die Effizienz des Verfahrens wird dadurch gesteigert, daß die als einzelne Bögen vorliegenden Formate nicht zwischen einzelne Bögen der Kaschierung gebracht wird, sondern zwischen zwei kontinuierlich herangeführte Kaschierbahnen, wodurch ein über größere Chargen kontinuierlich verlaufendes Verfahren möglich wird.

Die Effizienz wird noch verbessert, wenn die einzelnen Formate als durchgehendes Formatband vorliegen, wofür jedoch auch ein kontinuierliches Anfasern der ursprünglichen Blätter notwendig ist.

Der so entstehende bandförmige und im wesentliche endlose Kaschierverbund wird entsprechend auch während seines Durchlaufs getrocknet und gepreßt, also nicht chargenweise während der Zwischenlagerung zu einem nachfolgenden Bearbeitungsschritt, sondern während des Durchlaufs durch die Kaschiermaschine.

Dies wird möglich, da die in den Kaschierverbund durch den Kleber eingebrachte Feuchtigkeit abgeführt wird, indem der Kaschierverbund durch Überströmen mit trockener, ggf. erwärmter, Luft abtransportiert wird, anstelle der bisher verwendeten saugfähigen Fliese, die in Kontakt mit dem Kaschierverbund gebracht wurden und die Flüssigkeit primär abgesaugt hatten.

Zusätzlich wird der Kaschierverbund gepreßt, jedoch nicht permanent während des Durchlaufens durch die Trocknungsstrecke, sondern nur entlang einzelner, möglichst kurzer, Streckenabschnitte, beispielsweise in dem der Kaschierverbund mehrere Preßwalzenpaare hintereinander durchläuft. Das Verpressen ist notwendig, um eine gute Haftung zwischen Kaschierung und Format zu erreichen, und insbesondere auch das Eindringen des Klebers in das Format bis zur gewünschten Tiefe zu bewirken.

Dabei wird als Kleber für die Kaschierung ein Stoff verwendet, der die im Format enthaltenen Farbstoffe wasserunlöslich macht, und sie vorzugsweise einhüllt, und der darüber hinaus ampholytisch, also pH-ausgleichend, wirkt. Dieser Kleber muß sich darüber hinaus schnell lösen lassen, und vorzugsweise nur auf physikalischem Wege, also mittels Wasserzugabe und/oder Wärmezufuhr, jedenfalls aber unter Bedingungen, die den Kernklebstoff mit dem in späteren Bearbeitungsschritten ein Kernmaterial in das Format eingebracht wird, noch nicht löst.

Ein solcher Kaschierungskleber ist beispielsweise Gelatine, wobei sich ergeben hat, daß für die Verwendung im Rahmen der vorliegenden Erfindung eine Viskosität zwischen 200 Bloom und 250 Bloom am besten ist.

Als Material für die Kaschierung wird beispielsweise ein Filterpapier verwendet, welches wenigstens einige Minuten naßfest ist, also im nassen Zustand seine Reißfestigkeit eine Zeit lang nur unwesentlich einbüßt. Dabei empfiehlt sich ein Gewicht von 90 g/qm.

Auch nicht saugende Kaschiermaterialien wie etwa ein Polyestervlies sind verwendbar, was - besonders mit einer zusätzlichen Siliconbeschichtung - den Vorteil hat, daß die als Kleber verwendete Gelatine dann nicht in die Kaschierung eindringt, sondern lediglich in das Format, und damit weniger Gelatine benötigt wird. Damit müssen bei der anschließenden Trocknung auch nur geringere Wassermengen, die in der Gelatine, also dem Kleber, vorhanden sind, entfernt werden. Zusätzlich kann ein Polyestervlies geringeren Gewichts von etwa 60 g/qm und damit auch geringerer Dicke verwendet werden, wodurch beim anschließenden Aufspulen des fertigen, getrockneten und gepreßten, Kaschierverbundes eine größere Aufspulmenge auf die gleiche Verbundbobine paßt. Da vor allem der Anlauf und das Anhalten der Vorrichtung zeitaufwendig und materialintensiv ist, reduziert die Vergrößerung der Einzelchargen erheblich die Nebenzeiten des Verfahrens und der Anlage.

Die Vorrichtung zur Durchführung des Verfahrens ist in der Regel als separate Arbeitsstation aufgebaut, d. h., die Kaschierbahnen sind zur Behandlung einer bestimmten Chargenmenge auf Kaschierbobinen aufgewickelt, die an der Maschine angeordnet sind.

Ebenso wird der fertige Kaschierverbund nicht sofort an die nächste Bearbeitungsstation zur zeitgleichen Weiterverarbeitung weitergeleitet, sondern auf einer Verbundbobine zur Zwischenlagerung aufgewickelt.

Diese Bobinen sind ebenso wie alle anderen Baugruppen, die sich über die Breite der Kaschierbahn erstrecken, nur einseitig, also frei auskragend an einer senkrechten Zentralwand befestigt, die das Maschinengestell bildet. Entlang dieser Zentralwand werden die Formate horizontal entlanggeführt und dabei zuerst auf eine von unten her zugeführte und horizontal weitergeführte untere Kaschierbahn, die auf der Kontaktseite zu den Formaten hin vorher in einer Beleimstation mit Gelatine als Kleber flächig beschichtet wurde, aufgelegt.

Etwas weiter, wenn wegen der inzwischen verstrichenen geringfügigen Zeitspanne bereits die Gelatine etwas in das Format eingedrungen ist und damit dessen Position auf der unteren Kaschierung etwas gefestigt ist, wird eine von oben her zugeführte zweite Kaschierbahn, die ebenfalls beleimt ist, von oben auf das Format aufgelegt.

Der gesamte Kaschierverbund durchläuft dann ein erstes Preßwalzenpaar, um die Positionierung der drei Bestandteile zueinander zu verfestigen, indem durch die Pressung die Gelatine in das Format und - bei einem saugfähigen Kaschiermaterial - auch in das Kaschiermaterial eindringt.

Anschließend läuft dieser Kaschierverbund immer noch horizontal waagerecht in einen Trocknungskasten, der ebenfalls an der Zentralwand befestigt ist, hinein und durchläuft diesen Trocknungskasten ebenfalls gerade, um während dieser Trocknung keine Biegung des Kaschierverbundes zu fixieren.

Erst nach dem Herauslaufen aus dem Trocknungskasten wird über eine Umlenkrolle mit großem Durchmesser eine Umlenkung des Kaschierverbundes zu der Verbundbobine durchgeführt, die aus dem gleichen Grund ebenfalls einen Kern mit großem Durchmesser besitzt.

Das im wesentlichen geschlossene Gehäuse des Trocknungskastens wird mit trockener Luft durchströmt, die ggf. vor oder beim Einströmen in den Trocknungskasten erwärmt werden kann.

Im Verlauf der Strecke sind - insbesondere am Anfang und Ende - Umlenkwalzen vorhanden, die um eine Schwenkachse, welche senkrecht zur Rotationsachse der Umlenkachse und etwa in Richtung der Bandlaufrichtung liegt, unabhängig voneinander geringfügig verschwenkbar sind. Dadurch kann die Laufrichtung, also der Geradeauslauf, des darüberlaufenden Bandes eingestellt werden, wobei der Umschlingungswinkel wenigstens 90° betragen sollte.

Statt dessen besitzen bei den hier verwendeten Preßwalzenpaaren immer beide Walzen eine zylindrische Form. Eine der Walzen kann jedoch um eine Schwenkachse, die senkrecht zur Rotationsachse der Walze verläuft, geringfügig verschwenkt werden, um die Rotationsachsen der beiden Preßwalzen nicht exakt parallel, sondern mit einem geringen Zwischenwinkel einzustellen, und dadurch die Kaschierbahnen seitlich geringfügig auszulenken.

Zusätzlich können die Preßwalzenpaare selbstverständlich auseinandergefahren werden, um sie - vor allem für das Anfahren der Maschine - völlig außer Kontakt voneinander zu bringen.

Zu diesem Zweck sind die oberen Walzen der Preßwalzenpaare in der insgesamt anhebbaren, oberen Hälfte - sozusagen dem Deckel - des Trocknungskastens, gelagert, und können damit insgesamt angehoben werden. Zusätzlich kann bei jedem einzelnen Preßwalzenpaar der Abstand der Preßwalzen und damit die Stärke der durch sie verursachten Pressung eingestellt werden.

Dadurch, daß die beiden Kaschierbahnen nicht gleichzeitig, also am selben Punkt des Durchlaufs der Formate, von beiden Seiten auf diese aufgebracht werden, müssen besondere Maßnahmen ergriffen werden, um dennoch von beiden Seiten des Formates her ein gleich tiefes Eindringen des Klebers - theoretisch genau bis zur Mitte - zu bewirken.

Hierzu sind die Beleimstationen an den beiden Kaschierungsbahnen um unterschiedliche Strecken stromaufwärts des Kontaktpunktes der jeweiligen Kaschierbahn mit den zugeführten Formaten bzw. der zugeführten Formatbahn entfernt. Dabei ist zu berücksichtigen, daß der Kontaktpunkt mit der ersten Kaschierbahn vor dem Kontaktpunkt mit der zweiten Kaschierbahn liegt, und daher die Verklebung zwischen Format und erster Kaschierbahn sich bis zum Erreichen des zweiten Kontaktpunktes mit der zweiten Kaschierbahn verfestigen und in das Format eindringen konnte. Die Abstände werden so festgelegt, daß sich unter Berücksichtigung aller Umstände ein möglichst gleichmäßige Verklebung hinsichtlich Eindringtiefe, Trocknungsgrad und anderer Faktoren von beiden Seiten des Formates her zu dessen Mittelebene hin ergibt.

Bei der Zuführung der einzelnen Kaschierbahnen zu den Beleimstationen und zur Aufbringstrecke, also den Kontaktpunkten mit den Formaten, muß auf exakte Seitenführung geachtet werden, um im weiteren Verlauf der Anlage nur noch geringe Korrekturen im Hinblick auf die Seitenführung an dem Kaschierverbund vornehmen zu müssen. Um dies zu erreichen sind zwischen den Kaschierbobinen, auf denen die Kaschierung vor dem Verbinden mit den Formaten aufgewickelt ist, und der Beleimstation Sensoren zum Abtasten der richtigen Lage der Seitenkanten vorhanden, und mittels deren Signale wird über eine Steuereinrichtung die Axiallage der Bobine verändert, also ihr Abstand zur Zentralwand.

Um keine Biegespannungen im späteren Kaschierverbund auftreten zu lassen wird der Kaschierverbund bis zum Ende der Trockenstrecke geradegeführt und das Umlenken sowie Aufwickeln auf die Verbundbobine geschieht mit einem Umlenkradius bzw. Radius des Wickelkernes von mindestens 30 cm.

Ebenso besitzen auch die Kaschierbobinen einen solchen Mindest-Kerndurchmesser.

Um Längsspannungen im späteren Kaschierverbund zu vermeiden, wird zum einen darauf geachtet, daß die beiden Kaschierbobinen, von denen die obere und untere Kaschierung abgezogen werden, immer den gleichen Füllstand, also momentan wirksamen Radius, besitzen. Damit Abweichungen hierbei sich möglichst wenig auswirken, wird insbesondere ein noch größerer Radius des Wickelkernes der Kaschierbobinen von 50 cm und mehr bevorzugt.

Weiterhin wird in den beiden den Kontaktpunkten zugeführten Kaschierbahnen darauf geachtet, daß in beiden Kaschierbahnen die exakt gleiche Zugspannung vorliegt. Dies wird dadurch erreicht, daß beide Kaschierbobinen über Magnetpulverkupplungen gebremst werden, deren Bremskraft über die Stromzufuhr exakt mittels einer entsprechenden elektronischen Steuerung auf den gleichen Wert gesteuert werden kann. Dabei wird in der Regel ein konstant gehaltener Erfahrungswert vorgegeben.

Um weiterhin beim Durchlauf durch die Maschine an keiner Stelle durch leicht differierende Antriebsgeschwindigkeiten der einzeln angetriebenen Preßwalzenpaare, Kontaktwalzen, Umlenkwalzen oder Bobinen unzulässige Längsspannungen auftreten zu lassen, sind alle mit dem Material in Verbindung kommenden Elemente über eine alle diese Elemente verbindende Antriebskette bzw. einen Antriebsriemen schlupffrei zueinander angetrieben.

Weiterhin kommt es darauf an, daß bei der Beleimung, bei der ja bereits die unterschiedlichen Einwirkzeiten von den beiden Kaschierbahnen aus bis zum Fertigstellen des Kaschierverbundes berücksichtigt werden müssen, mit einem Kleber beleimt wird, der exakt den theoretisch vorgegebenen Parametern entspricht, insbesondere hinsichtlich chemischer Zusammensetzung, gleichmäßiger Durchmischung, Temperatur, Viskosität, etc..

Um dies sicherzustellen, werden die beiden Vorlagen der Beleimstationen, in welche deren Beleimwalzen eintauchen, ständig von einer zentralen Kleberaufbereitungsstation mit frischem Kleber versorgt, indemvon der Kleberaufbereitungsstation aus über eine Leitung ständig frisch aufbereiteter Kleber in die Vorlage gedrückt und der überschüssige Kleber von dort über eine Überlaufleitung zurück zur Aufbereitungsstation geführt wird.

Um Temperaturabfälle zwischen der Kleberaufbereitungsstation und den Beleimstationen durch die unterschiedlichen Leitungslängen dorthin zu vermeiden, sind wenigstens die Vorlaufleitungen zu den Beleimstationen beheizt.

Eine Ausführungsform gemäß der Erfindung ist im Folgenden anhand der Figuren näher beschrieben. Es zeigen
- Fig. 1: die Kaschiermaschine in der Frontansicht im Betrieb und
- Fig. 2: die Maschine in der Frontansicht ohne Verbrauchsmaterialien, jedoch mit den hinter der Zentralwand vorhandenen Antriebselementen.

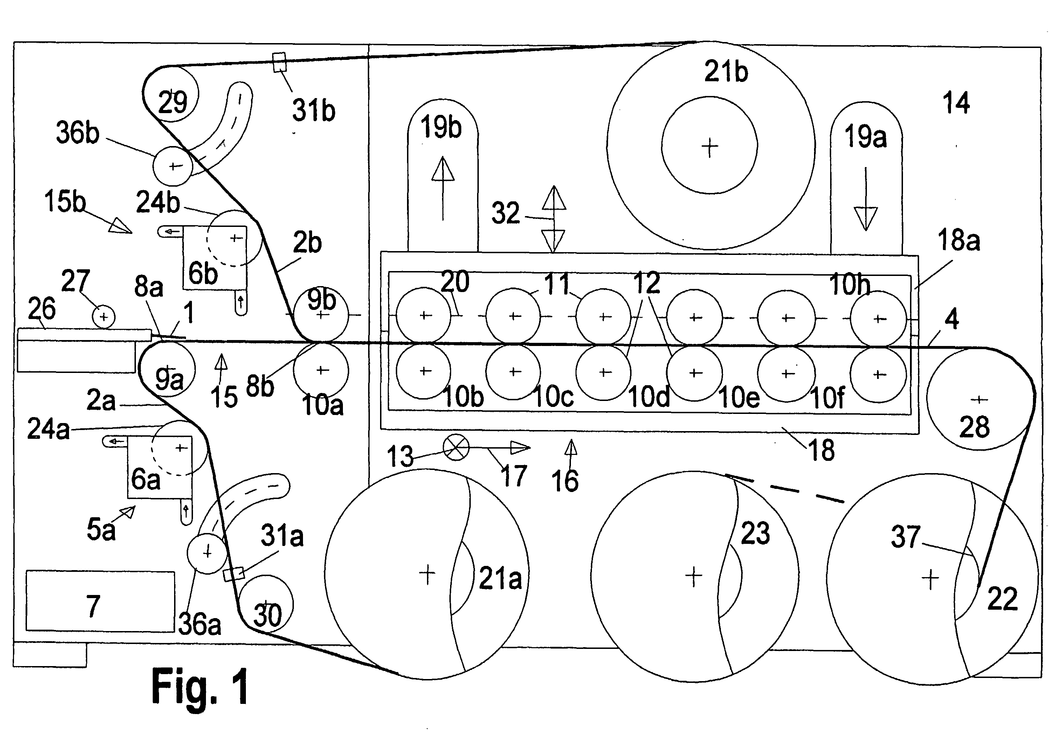

Fig. 1 zeigt die Frontansicht der Maschine, in welcher von oben die Kaschierung 2b und von unten die Kaschierung 2a zugeführt wird, welche im Verlauf der Aufbringstrecke 15 zu einem Kaschierverbund 4 verbunden werden, welcher nach Durchlaufen der Trocknungsstrecke 16 auf einer Verbundbobine 22 aufgewickelt wird, wobei zwischen die einzelnen Schichten eine Zwischenlage, welche von der Zwischenlagenbobine 23 abgespult wird, zwischengewickelt wird.

Die Kaschierungen sowie der Kaschierverbund sind dabei in der Frontansicht gut zu sehen, da alle Bobinen, Umlenkwalzen und die Preßwalzenpaare 10a bis 10h nur auf der vom Betrachter abgewandten Rückseite in der senkrecht stehenden Zentralwand 14 einseitig und nach vorne frei auskragend gelagert sind. Dadurch ist das Beobachten des Kaschierverlaufs durch den Bediener gut möglich, und es können auch die Veränderungen, die durch ein Nachregeln an der Maschine bewirkt werden, jederzeit gut beobachtet werden.

Die Aufbringstrecke 15 beginnt mit einer Aufbringwalze 9a, über die die untere Kaschierung 2a von der unterhalb der Durchlaufstrecke angeordneten Kaschierbobine 21a abgespult und über die Aufbringwalze 9a abgestützt in die Horizontale umgelenkt wird. Die Kaschierung 2a durchläuft am Ende der Aufbringstrecke 15 das erste Preßwalzenpaar 10a, bestehend aus einer oberen Preßwalze 11 und einer unteren Gegenwalze 12, wie in einem der weiteren Preßwalzenpaare z. B. 10d,angegeben.

Unmittelbar hinter der Aufbringwalze 9a wird auf die nach oben weisende Seite der Kaschierung 2a ein Format 1 aufgelegt, welches mit einer Geschwindigkeit zugeführt wird, die möglichst gleich der Transportgeschwindigkeit der Kaschierung 2a ist.

Die aus einzelnen Bögen bestehenden Formate 1 sind zu diesem Zweck vor der Aufbringwalze 9a in einem horizontalen, zur Aufbringstrecke hin offenen, Formatbehälter 26 gestapelt, und auf dem obersten Format liegt eine Transportwalze 27 auf. Durch Drehung der Transportwalze 27 und deren Reibung gegenüber dem obersten Format 1 wird dieses Format 1 auf die Aufbringstrecke 15 geschoben und mit der unteren Kaschierung 2a verklebt, da die dem Format 1 zugewandte Seite der Kaschierung 2a flächig beleimt ist.

Zu diesem Zweck befindet sich - betrachtet von der unteren Kaschierbobine 21a aus - nach einer ersten Umlenkwalze 30 am Weg der Kaschierung 2a eine Beleimstation 5a, die eine Leimauftragwalze 24a umfaßt. Diese Leimauftragwalze 24a ist vorzugsweise ebenfalls so angetrieben, daß kein Schlupf zu der mit der Leimauftragwalze 24a in Kontakt stehenden Kaschierbahn 2a besteht.

Mit ihrem unteren Teil taucht die Leimauftragswalze 24a in einen Vorlage-Behälter 6a ein, in dem sich der Kleber, meist Gelatine, befindet.

Die Aufbringstrecke 15, also die Strecke zwischen den Aufbringpunkten 8a der Aufbringwalze 9a und dem Aufbringpunkt 8b der Aufbringwalze 9b, die gleichzeitig die obere Preßwalze des ersten Preßwalzenpaares 10 ist, ist dabei geringfügig länger als die Länge eines Formates 1. Das Format 1 ist daher bereits vollflächig mit der unteren Kaschierung 2a verklebt, wenn es den zweiten Aufbringpunkt 8b erreicht, also in das erste Preßwalzenpaar 10a hineinläuft. Denn an dieser Stelle wird von oben her mittels der Aufbringwalze 9b, die gleichzeitig die erste Preßwalze 11 ist, eine obere Kaschierung 2b zugeführt, die auf der Oberseite des Formates 1 und damit auf der unteren Kaschierung 2a abgelegt wird, und durch die Aufbringwalze 9b von einem Verlauf von oben nach unten in einen horizontalen Verlauf, die Durchlaufrichtung 17, gebracht wird.

Die obere Kaschierung 2b ist dabei auf einer Kaschierbobine 21b aufgewickelt und wird von dieser abgezogen, welche sich im oberen Bereich der Maschine befindet, und dort wiederum einseitig an der Zentralwand 14 gelagert ist. Auch die obere Kaschierung 2b wird über eine erste Umlenkrolle 21 von einem im wesentlichen horizontalen Verlauf aus nach unten zur Aufbringwalze 9b umgelenkt, und vor der Aufbringwalze 9b mittels einer Beleimstation 15b, welche analog zur Beleimstation 15a der unteren Kaschierung 2a aufgebaut ist und auch eine entsprechende Auftragswalze 24b umfaßt, beleimt.

Durch das erste Preßwalzenpaar 10a wird der so entstandene Kaschierverbund 4, bestehend aus einer oberen Kaschierung 2b, den mittig angeordneten Formaten 1 und einer unteren Kaschierung 2a, ein erstes Mal gepreßt, um den mittels der Kaschierungen aufgebrachten Kleber in der gewünschten Art und Weise in das Innere des Formates bis in die Nähe der Längsmittelebene vordringen zu lassen.

Auch ist dieser Kaschierverbund 4 aufgrund des hier noch weichen Klebers schwer zu handhaben, und die einzelnen Schichten können leicht gegeneinander verrutschen. Deshalb muß besonders die Seitensteuerung des im Durchlauf anschließend durch eine Trocknungsstrecke 16 geführten Kaschierverbundes 4 sehr behutsam vorgenommen werden, was bedeutet, daß nach Erstellen des Kaschierverbundes möglichst geringe, im Idealfall überhaupt keine, seitliche Steuerung, also eine aktive Auslenkung in Querrichtung 13, der Blickrichtung des Betrachters, vorgenommen werden.

Zu diesem Zweck wird versucht, die Kaschierungen 2a und 2b bereits vor Erreichen der Aufbringstrecke 15 und damit vor Erstellen des Kaschierverbundes 4 möglichst exakt im Hinblick auf die seitliche Führung und den seitlichen Versatz zu steuern.

Zu diesem Zweck sind zwischen den Kaschierbobinen 21a und 21b und den danach angeordneten jeweils ersten Umlenkrollen 30 bzw. 29 jeweils Kantenabtastungen 31a, 31b an der Zentralwand 14 angeordnet, welche den Abstand der der Zentralwand 14 nächstliegenden Kante der Kaschierbahn 2a bzw. 2b erfassen.

Dieses Signal wird an eine entsprechende Steuerung weitergegeben, die ihrerseits daraufhin den axialen Abstand der Kaschierbobine 21a bzw. 21b von der Zentralwand 14 nachregelt, um die jeweilige Kaschierbahn 2a, 2b exakt in Durchlaufrichtung zu führen.

Ferner sind an jeder der Kaschierbahnen 2a, 2b vor Erreichen der Aufbringstrecke 15, in der Regel sogar vor der jeweiligen Beleimstation 15a, 15b Spannungssensoren 36a, 36b in Form von quer zur Bahnrichtung federbeaufschlagten Umlenkrollen geordnet, um die momentane Spannung jeder der beiden Kaschierbahnen 2a, 2b zu messen. Die beiden Kaschierbahnen sollen mit exakt gleicher Zugspannung in die Aufbringstrecke 15 und damit den Kaschierverbund 4 eingebracht werden, um Längsspannungen im Kaschierverbund zu vermeiden.

Die von den Spannungssensoren 36a, 36b ermittelten Spannungswerte werden wiederum an eine Steuerung abgegeben, die bei Bedarf die Bremskraft, mit denen die Kaschierbobinen 21a, 21b gebremst werden, verstärkt oder abschwächt. Dies geschieht mit Hilfe der an sich bekannten Magnetpulverkupplungen, deren Bremskraft durch Veränderung des anliegenden Stromes bzw. der anliegenden Spannung exakt gesteuert werden kann.

Zusätzlich sind die Umlenkrollen 36a, 36b dieser Spannungssensoren so entlang der Zentralwand 14 verlagerbar, daß damit die Kaschierbahnen 2a, 2b bei Bedarf von den Beleimstationen 15 abgehoben werden können.

Die Regelung der Seitenkantenabweichung und der Spannung ist für beide Kaschierbahnen 2a, 2b getrennt und unabhängig voneinander möglich.

Die beiden Beleimstationen 15a, 15b verfügen jeweils in ihrer Vorlage 6a bzw. 6b im Bodenbereich über eine Zuleitung und am oberen Rand, als Überlauf ausgebildet, über eine Ableitung. Sowohl die Zuleitungen als auch die Ableitungen stehen mit einer separaten Kaschierkleber-Aufbereitung 7 in Verbindung, in welcher der Kaschierkleber im richtigen Mischungsverhältnis angesetzt, ständig zur gleichmäßigen Durchmischung gerührt und temperiert wird, und einer ständigen Kontrolle des Viskositätswertes unterzogen wird.

Diese Kaschierkleber-Aufbereitung 7 steht über - nicht dargestellte - Schläuche mit dem Zulauf und Ablauf jeder der beiden Vorlagen 6a, 6b in Verbindung, wobei ständig von der Aufbereitung 7 über den Vorlaufanschluß im unteren Teil der Vorlagen 6a, 6b Kleber in die Vorlagen hineingepumpt und dadurch ständig vorhandene Überschuß in der Vorlage über den Vorlauf zur Aufbereitung 7 zurückgeführt wird. Durch dieses ständige Umpumpen ist die gleiche Beschaffenheit des Klebers sowohl in der Aufbereitung 7 als auch in beiden Vorlagen 6a und 6b sichergestellt, wobei zur Kompensation der unterschiedlich langen Verbindungsschläuche von der Aufbereitung 7 zu den Vorlagen 6a, 6b diese Schläuche elektrisch beheizt sind.

Von dem Ende der Aufbringstrecke 15 aus durchläuft der Kaschierverbund 4 weiterhin horizontal die Trocknungsstrecke 16, .die aus einem bis auf Einlaß- und Auslaßöffnung geschlossenen Trocknungskasten 18 besteht.

Durch diesen Trocknungskasten 18 wird über einen Lufteinlaß 19a, der sich in der Nähe des Auslaufes für den Kaschierverbund befindet, trockene Luft eingeblasen und über einen Luftauslaß 19b, der sich in der Nähe des Einlasses für den Kaschierverbund 4 befindet, mit Feuchtigkeit aus dem Kaschierverbund, insbesondere aus dem Kaschierkleber, befrachtete Luft abtransportiert. Die Trocknungsluft kann je nach Umgebungstemperatur, Beschaffenheit des Klebers und der übrigen Materialien etc. auch beheizt werden.

Innerhalb des Trocknungskastens 18 wird der Kaschierverbund auch mehrfach hintereinander gepreßt, indem er mehrere Preßwalzenpaare 10b, 10c... durchläuft, die den Kaschierverbund 4 zunehmend quer zu seiner Hauptebene preßt. Da in den Preßwalzenpaaren 10b, 10c nur Linienberührung, jedenfalls nur kleinflächige Berührung vorherrscht, steht ein Großteil der Durchlaufstrecke zum Konvektionstrocknen mittels der anfangs trockenen Luft zur Verfügung.

Das stufenweise Pressen bewirkt zum einen, daß der Kaschierungskleber immer weiter in die Formate eindringt, und - bei einem Kaschiermaterial mit Hohlräumen bzw. mit ausreichender Saugfähigkeit - auch in das Kaschierungsmaterial. Durch die saugfähigen Bestandteile der Formate und der Kaschierung wird die im Kaschierungskleber enthaltene Feuchtigkeit in die anliegenden, saugfähigen Bereiche der Vorlage beziehungsweise des Kaschiermaterials abgeführt, wodurch sich der Kleber schnell verfestigt, und der Kaschierverbund eine sehr schnell zunehmende Festigkeit erhält.

Mittels der Konvektionstrocknung wird die im gesamten Verbund verteilte Feuchtigkeit über die Außenseiten des Kaschierverbundes 4 nach und nach abgeführt, und durch das zunehmende Pressen auch stufenweise immer von den inneren, feuchtesten Bereichen zu den außen liegenden, trockensten Bereichen nachgefördert.

Dadurch ist auf einer sehr kurzen Trocknungsstrecke 16 eine sehr effiziente Trocknung des Kaschierverbundes 4 möglich.

Die einzelnen Preßwalzenpaare 10a, 10b ... bestehen dabei jeweils aus einer unteren Gegenwalze 12, die fest, wiederum jedoch nur einseitig, in der Zentralwand 14, bzw. der unteren Hälfte des Trocknungskastens 18, gelagert und angetrieben sind.

Bei der Führung des Kaschierverbundes 4 ist es wichtig, daß der Kaschierverbund 4 im Verlauf der Trocknungsstrecke 16 gerade geführt wird, also keine Biegungen im Kaschierverbund 4 durch die dabei stattfindende Trocknung fixiert werden.

Zu diesem Zweck sind die einzelnen Preßwalzenpaare 10b, 10c...in einem so geringen Abstand zueinander angeordnet, daß dazwischen noch keine nennenswerte Durchbiegung des Kaschierverbundes 4 auftreten kann, andererseits aber eine ausreichende freie Länge des Kaschierverbundes 4zwischen den Preßwalzenpaaren 10b, 10c...zum Überstreichen mit der trockenen Luft vorhanden ist, die innerhalb des Trocknungskastens 18 durch nicht dargestellte Leiteinrichtungen in der gewünschten Weise verteilt und geführt wird.

Gegen die unterhalb des Kaschierverbundes 4 angeordneten Gegenwalzen 12 preßt jeweils von oben her eine oberhalb des Kaschierverbundes 4 angeordnete Preßwalze 11, die nicht angetrieben ist, sondern nur durch ihre Auflage auf dem Kaschierverbund mittels ihres Eigengewichtes und/oder Anpressung mitläuft.

Diese Preßwalzen 11 sind ebenso wie die Walzen 12 nicht ballig, sondern möglichst exakt zylindrisch geformt, und einseitig gelagert, jedoch nicht direkt in der Zentralwand 14, sondern in der oberen Hälfte 18a des Trocknungskastens 18, welcher insgesamt gegenüber dem Unterteil 18b und damit gegenüber den unteren Gegenwalzen 12 angehoben werden kann.

Dadurch werden die Preßwalzenpaare auf der Trocknungsstrecke 18 außer Funktion gesetzt, was insbesondere zum Reinigen der Maschine, zum Anlauf der Maschine etc. von Vorteil ist.

Zusätzlich kann jede einzelne Preßwalze 11 separat und unabhängig von den anderen Preßwalzen im Abstand relativ zu ihrer Gegenwalze 12 verändert werden, und damit die Stärke der Pressung variiert werden. Darüber hinaus kann eine seitliche Steuerung des Kaschierverbundes in begrenztem Maße erzielt werden, indem die Preßwalze 11 nicht exakt parallel zur Gegenwalze 12 liegen muß, sondern dabei auch ein geringer Zwischenwinkel zwischen den beiden Rotationsachsen im Bereich von. Bruchteilen eines Winkelgrades einstellbar sind.

Zu diesem Zweck ist jede Preßwalze 11 um eine Schwenkachse 20, welche im rechten Winkel zur Rotationsachse der Preßwalze 11 verläuft und vorzugsweise parallel zur Durchlaufrichtung 17 des Kaschierverbundes 4, geringfügig verschwenkbar.

Erst nach dem Verlassen der Trocknungsstrecke 16 wird der Kaschierverbund auf eine Verbundbobine 22 aufgewickelt, und muß zu diesem Zweck rundgebogen werden. Um diese Biegung möglichst gering ausfallen zu lassen, besitzt diese Verbundbobine 22 einen Kern mit mindestens 30 cm Durchmesser, und auch die vorher zwischen dem Ende des .Trocknungskastens 18 und der Verbundbobine 22 angeordnete Umlenkrolle 28 besitzt mindestens einen solchen Durchmesser.

Die Verbundbobine 22 ist dabei relativ niedrig an der Zentralwand 14 angeordnet, und zwar im Bereich etwa unterhalb des Endes der Trocknungsstrecke 16, also des Trocknungskastens 18.

Daneben und in etwa auf gleicher Höhe ist eine Zwischenlagenbobine 23 angeordnet, auf der ein Zwischenlagenmaterial aufgewickelt ist, welches in bestimmten Anwendungsfällen zwischen die einzelnen Schichten des Kaschierverbundes auf die Verbundbobine 22 mit aufgewickelt werden muß, um ein Verkleben der einzelnen Schichten des Kaschierverbundes 4 gegeneinander zuverlässig zu vermeiden.

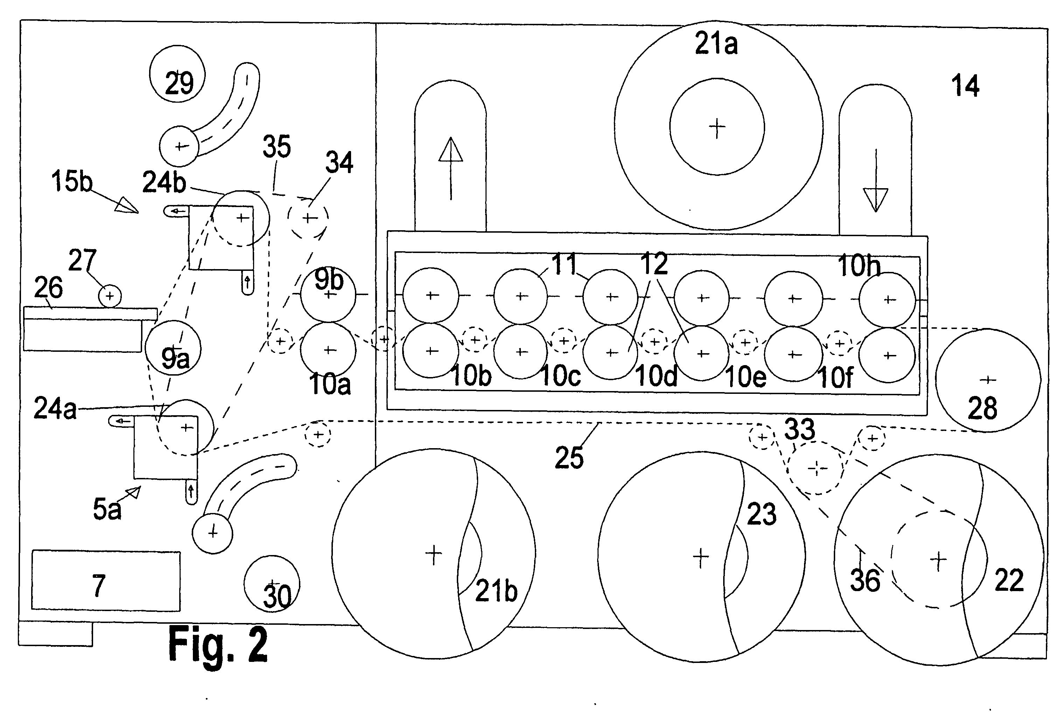

Fig. 2 zeigt in derselben Blickrichtung wie Fig. 1 die primäre Antriebskette 25, die als kurz gestrichelte Linie eingezeichnet ist, sowie die Hilfskette 35, die als lang gestrichelte Linie eingezeichnet ist. Beide befinden sich hinter der Zentralwand 14, zur Erleichterung des Verständnisses ist jedoch nicht die Rückansicht sondern die Vorderansicht gewählt, wobei die in Fig. 1 eingezeichneten Kaschierungen 2a, 2b sowie der Kaschierverbund 4 weggelassen wurden.

Dabei ist zu erkennen, daß mittels der primären Antriebskette 25 alle relevanten, angetriebenen Bauteile angetrieben werden, so daß deren exakt gleich schneller Lauf erzielt werden kann ohne aufwendige elektronische Steuerungsmechanismen. Anstelle einer Kette kann auch ein Zahnriemen oder ein anderes schlupffreies Antriebselement verwendet werden.

Vom Hauptmotor 33, der die Antriebskette 25 antreibt, erstreckt sich diese - im Uhrzeigersinn betrachtet - über eine Umlenkrolle zur Leimauftragwalze 24a der unteren Beleimungsstation 5a, von dort zur Aufbringwalze 9a am Anfang der Aufbringstrecke 15, weiter zur Leimauftragwalze 24b der oberen Beleimungsstation 15b und von dort über eine Umlenkrolle zur unteren, der Gegenwalze 12,des ersten Preßwalzenpaares 10a.

Von dort aus treibt die Antriebskette 25 weiterhin auch alle anderen unteren Gegenwalzen 12 der Preßwalzenpaare 10b bis 10h innerhalb des Trocknungskastens 18 an, wobei zwischen zwei benachbarten Gegenwalzen 12 jeweils ein Umlenk- bzw. Spannritzel angeordnet ist.

Nach dem letzten Preßwalzenpaar 10h läuft die Antriebskette 25 über die hintere Umlenkwalze 28 und ein kleines Umlenkritzel zurück zum Hauptmotor 33.

Die Antriebskette 25 treibt damit alle mit dem Kaschierverbund 4 bzw. mit den einzelnen Kaschierungen 2a, 2b bzw. mit den Formaten 1 in Verbindung stehenden rotierenden Bauteile an mit Ausnahme der Transportwalze 27, die die Geschwindigkeit des Auswurfes von Formaten 1 auf die Aufbringstrecke 15 regelt, und damit auch den gegenseitigen Abstand der Formate 1 im Kaschierverbund, der einstellbar sein muß.

Da auch beim Stillstand der gesamten Maschine wegen einer Fehlfunktion, eines Unfalls etc. die Leimauftragswalzen 24a, 24b der Beleimungsstationen 5a, 5b weiterhin angetrieben werden müssen, um die Verhärtung des Klebers an ihrer Oberfläche zu vermeiden - was natürlich in einem von der jeweiligen Kaschierbahn abgehobenen Position erfolgt - sind die beiden Leimauftragswalzen 24a, 24b zusätzlich mittels einer Hilfskette 35 von einem Hilfsmotor 34 aus antreibbar.

Weiterhin sind die Beleimstationen 5a 5b in ihrer Position entlang des Kaschierbandes verstellbar, wie bereits ausgeführt.

### BEZUGSZEICHENLISTE

- 1 -: Formate
- 2a,b: Kaschierung,
Kaschierbahn
- 3 -: Kernschicht
- 4 -: Kaschierverbund
- 5a -: Beleimstation
- 6a, b -: Vorlagen
- 7: Aufbereitung,
Kaschierkleber-Aufbereitung
- 8a,b -: Aufbringpunkten
- 9a -: Aufbringwalze
- 10a-h: Preßwalzenpaare
- 11 -: Preßwalze
- 12 _: Gegenwalze
- 12a -: Kaschierbahn
- 13 -: Kaschierbahn
- 14 -: Zentralwand
- 15 -: Aufbringstrecke,
- 15a,b: Beleimstation
- 16 -: Trocknungsstrecke
- 17 -: Durchlaufrichtung
- 18 -: Trocknungskasten
- 18a -: obere Hälfte
- 19a -: Lufteinlaß
- 19b -: Luftauslaß
- 20 -: Schwenkachse
- 21 -: Umlenkrolle
- 21a -: Kaschierbobine
- 22 -: Verbundbobine
- 23 -: Zwischenlagenbobine
- 24a,b: Leimauftragswalze,
Auftragswalze
- 25 -: Antriebskette
- 26 -: Formatbehälter
- 27 -: Transportwalze
- 28 -: Umlenkrolle
- 29 -: Umlenkrollen
- 30 -: Umlenkwalze
- 31 a,b: Kastenabtastungen
- 33 -: Hauptmotor
- 34 -: Hilfsmotor
- 35 -: Hilfskette
- 36a,b: Spannungssensoren

## Patentansprüche

1. Verfahren zum beidseitigen Kaschieren von Formaten, insbesondere vervollständigten Papierblättern, insbesondere Buchseiten, insbesondere als erstem Schritt für das Restaurieren solcher Papierblätter, mit folgenden Schritten:
- Aufbringen der beiden Kaschierungen (2a, 2b) auf die beiden Seiten (1a, 1b) des Formates (1) mittels Kaschierkleber und
- Trocknen und Pressen des Kaschierverbundes (4), wobei
das Kaschieren im Durchlaufverfahren erfolgt, indem
- die Formate (1) zwischen zwei gegeneinander geführte, Kaschierbahnen (2a, 2b) eingebracht werden, wobei
- die Formate (1) zunächst auf eine von unten zugeführte untere Kaschierbahn (2a) aufgelegt und anschließend mit einer von oben zugeführten Kaschierbahn (2b) abgedeckt werden, und
- der Kaschierverbund (4) quer zu seiner Ebene gepreßt wird,
**dadurch gekennzeichnet, dass**
- dieser Kaschierverbund (4) im Durchlaufverfahren mittels vorbeiströmender, trockener Luft getrocknet wird,
- der Abstand der Beleimung der ersten Kaschierbahn (2a) bis zu deren Auf bringpunkt (8a), an welcher die Formate (1) mit der Kaschierbahn (2a) in Kontakt kommen, geringer ist als der Abstand der Beleimung der zweiten Kaschierbahn (2b) von deren Aufbringpunkt (8b), und
- die Beleimung der ersten Kaschierbahn (2a) vom Aufbringpunkt (8b) der zweiten Kaschierbahn (2b) weiter entfernt erfolgt als die Beleimung der zweiten Kaschierbahn (2b) vom Aufbringpunkt (8b) der zweiten Kaschierbahn (2b).

2. Verfahren nach Anspruch 1,
**dadurch gekennzeichnet, dass**
der Abstand der Beleimung der ersten Kaschierbahn (2a) vom Aufbringpunkt (8b) der zweiten Kaschierbahn (2b) 1,2 bis 1,7 mal, insbesondere 1,5 mal, soweit voneinander entfernt sind wie die Beleimung der zweiten Kaschierbahn (2b) von deren Aufbringpunkt (8b).

3. Verfahren nach Anspruch 2,
**dadurch gekennzeichnet, dass**
der Aufbringpunkt (8a) der Formate (1) auf die erste Kaschierbahn (2a) von der Beleimung der ersten Kaschierbahn (2a) um ca. 70 bis 90%, insbesondere ca. 80%, so weit entfernt ist, wie von dem Aufbringpunkt (8b) der zweiten Kaschierbahn (2b).

4. Verfahren nach einem der vorstehenden Ansprüche,
**dadurch gekennzeichnet, dass**
der Aufbringpunkt (8b) der zweiten Kaschierbahn (2b) gleichzeitig der Punkt der ersten Pressung der Kaschierverbund (4) ist.

5. Verfahren nach einem der vorhergehenden Ansprüche,
**dadurch gekennzeichnet, dass**
der Verbund direkt einer nachfolgenden Bearbeitung, insbesondere zum Spalten, zugeführt wird.

## Claims

1. Procedure for lining formats on both their sides, in particular paper sheets, in particular book sheets, in particular as a first stage to restoring such paper sheets, with the following stages:
- the laying of those two lining strips (2a, 2b) on those two sides (1a, 1b) of the format (1) by means of a lining glue and
- the drying and the pressing of the lining compound (4), whereupon the lining is effected through a passing processing procedure, in that the formats (1) are inserted between two lining strips (2a, 2b) guided one towards the other, whereupon
- the formats (1) are firstly laid on an inferior upwards guided lining strip (2a) while further on they are coated with a superior downwards guided lining strip (2b), and the lining compound (4) is transversely pressed in respect of its plane, **characterized in that**
- the lining compound (4) is being dried through the passing processing procedure by means of a passing by dried air,
- the distance between the pasting point of the first lining strip (2a) up to its application point (8a), where the formats (1) are coming into contact with the lining strip (2a), is smaller than the distance between the pasting point of the second lining strip (2b) up to its application point (8b), and
- the pasting of the first lining strip (2a) is effected farther in respect of the application point (8b) of the second lining strip (2b) than the pasting of the second lining strip (2b) in respect of the application point (8b) of the second lining strip (2b).

2. Procedure according to claim 1, **characterized in that** the distance between the pasting point of the first lining strip (2a) up to the application point (8b) of the second lining strip (2b), is 1,2 to 1,7 times, in particular 1,5 times greater than the distance between the pasting point of the second lining strip (2b) up to its application point (8b).

3. Procedure according to claim 2, **characterized in that** the application point (8a) of the formats (1) on the first lining strip (2a) is distanced in respect of the pasting point of the first lining strip (2a) by about 70 to 90%, in particular by about 80% from the distance up to the application point (8b) of the second lining strip (2b).

4. Procedure according to one of the preceding claims, **characterized in that** the application point (8b) of the second lining strip (2b) is at the same time the point where the first pressing of the lining compound (4) is effected.

5. Procedure according to one of the preceding claims, **characterized in that** the lining compound is directly guided towards a further processing, in particular for cleavage.

## Revendications

1. Procédé pour le cachourage sur les deux parts des formats, spécialement des feuilles de papier entières, spécialement des pages de livre et spécialement comme un premier pas pour la restauration de telles feuilles en papier, avec les pas suivants:
- l'application des deux bandes de cachourage (2a, 2b) sur les deux faces (1a, 1b) du format (1) par l'intermédiaire d'une masse collante et
- le séchage et le pressage du groupe de cachourage (4), où le cachourage a lieu par un procédé de passage, ou
- les formats (1) seront introduits entre deux bandes de cachourage (2a, 2b) assises l'une vers l'autre, ou
- les formats (1) sont premièrement assis sur une bande de cachourage inférieure (2a) alimentée d'en bas et en continuation ceux-ci sont couverts avec une bande de cachourage (2b) alimentée d'en haut et
- le groupe de cachourage (4) sera pressée transversalement sur son plan, **caractérisé en ce que**,
- le groupe de cachourage (4) sera séché par le procédé de passage de l'air séché circulant près de celui-ci,
- la distance du point de collage de la première bande de cachourage (2a) jusqu'au point d'application (2a) de celle-ci, où les formats (1) viennent en contact avec la bande de cachourage (2a) est plus petite que la distance du point de collage de la deuxième bande de cachourage (2b) jusqu'au point d'application (8b) de celle-ci et
- le collage de la première bande de cachourage (2a) a lieu plus loin par rapport au point d'application (8b) de la deuxième bande de cachourage (2b) par rapport au point d'application (8b) de la deuxième bande de cachourage (2b).

2. Procédé selon la revendication 1, **caractérisé en ce que**, la distance du collage de la première bande de cachourage (2a) à partir du point d'application (8b) de la deuxième bande de cachourage (2b) est de 1,2 à 1,7 spécialement 1,5 fois, tant éloignés sont l'un de l'autre comme le collage de la deuxième bande de cachourage (2b) de son point d'application (8b).

3. Procédé selon la revendication 2, **caractérisé en ce que**, le point d'application (8a) des formats (1) sur la première bande de cachourage (2a) par rapport au point de collage de la première bande de cachourage (2a) est à peu près de 70 jusqu'à 90%, spécialement à peu près de 80%, tant est il éloigné comme par rapport au point d'application (8b) de la deuxième bande de cachourage (2b).

4. Procédé selon l'une des revendications antérieures, **caractérisé en ce que**, le point d'application (8b) de la deuxième bande de cachourage (2b) est en même temps le point de la première pression du groupe de cachourage (4).

5. Procédé selon l'une des revendications antérieures, **caractérisé en ce que**, le groupe est conduit directement vers un traitement ultérieur, spécialement au placard.
